(19) Europäisches Patentamt
European Patent Office
Office européen des brevets

(11) Veröffentlichungsnummer : **0 141 140 B1**

(12) # EUROPÄISCHE PATENTSCHRIFT

(45) Veröffentlichungstag der Patentschrift : **21.01.87**

(21) Anmeldenummer : **84110437.5**

(22) Anmeldetag : **03.09.84**

(51) Int. Cl.⁴ : **C 08 G 63/54**, C 08 G 63/76, C 08 L101/00 // (C08L101/00, 67:06)

(54) **Benzylidenmalonsäurepolyester, ihre Herstellung und die Verwendung derartiger Polyester zur UV-Stabilisierung von thermoplastischen Kunststoffen.**

(30) Priorität : **26.10.83 DE 3338860**
**17.03.84 DE 3409921**

(43) Veröffentlichungstag der Anmeldung : **15.05.85 Patentblatt 85/20**

(45) Bekanntmachung des Hinweises auf die Patenterteilung : **21.01.87 Patentblatt 87/04**

(84) Benannte Vertragsstaaten :
**AT CH DE FR GB IT LI NL SE**

(56) Entgegenhaltungen :
**FR-A- 1 137 056**
**FR-A- 2 219 930**
**JOURNAL OF POLYMER SCIENCE: POLYMER CHEMISTRY EDITION, Band 11, Nr. 7, Juli 1973, Seiten 1733-1752, John Wiley & Sons, Inc.; A. RAVVE et al.: "Synthesis of photocrosslinkable polyesters by the Knoevenagel reaction"**

(73) Patentinhaber : **BAYER AG**
**Konzernverwaltung RP Patentabteilung**
**D-5090 Leverkusen 1 Bayerwerk (DE)**

(72) Erfinder : **Scholl, Thomas, Dr.**
**Breslauer Strasse 31**
**D-4150 Krefeld 1 (DE)**
Erfinder : **Preuss, Reinhard, Dr.**
**Oderstrasse 55**
**D-4150 Krefeld 1 (DE)**
Erfinder : **Lachmann, Burkhard, Dr. c/o Bayer do Brasil**
**Estrada Boa Esperanza 650, CX Postal 1500**
**26150 Belford Roxo, Nova Iguacu RJ (BR)**
Erfinder : **Loewer, Hartmut, Dr.**
**Tizianstrasse 4**
**D-4010 Hilden (DE)**
Erfinder : **Müller, Peter Rolf, Dr.**
**Paul-Klee-Strasse 76**
**D-5090 Leverkusen 1 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 141 140 B1

**Beschreibung**

Gegenstand der vorliegenden Erfindung ist ein Verfahren zur Herstellung von Benzylidenmalonsäure-polyestern der Formel (Ib)

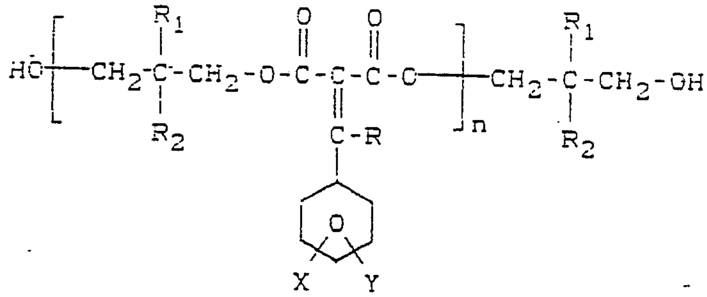

(Ib)

worin
R = H, $C_1$-$C_4$-Alkyl oder Phenyl,
$R_1$ Methyl oder Ethyl,
$R_2$ Methyl, Ethyl oder Propyl,
« n » eine ganze Zahl von 3 bis 30, vorzugsweise von 10 bis 25 und
X und Y gleich oder verschieden sein können und H, OH, Methoxy, Phenoxy, $C_1$-$C_4$-Alkyl, Phenyl, Cl oder Br sind,
mit Molekulargewichten $\overline{M}n$ von 970 bis 9 000, einer OH-Zahl von 5-115 und einer COOH-Zahl von 0-8, dadurch gekennzeichnet, daß man Malonsäurepolyester der Formel IV

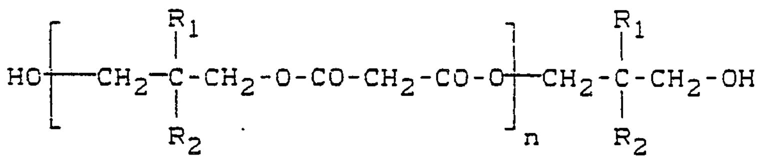

(IV)

worin $R_1$, $R_2$ und « n » die für Formel (Ib) genannte Bedeutung haben, mit $\overline{M}n$ von 500 bis 5 000 mit Aldehyden oder Ketonen der Formel (III),

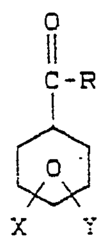

(III)

worin R, X und Y die für Formel (Ib) genannte Bedeutung haben, in der Art einer Knoevenagel Reaktion bei Temperaturen zwischen 20 °C und 150 °C, gegebenenfalls unter Zusatz eines inerten Lösungsmittels in Gegenwart eines Knoevenagel-Katalysators umsetzt.

Gegenstand der vorliegenden Erfindung sind auch die nach diesem erfindungsgemäßen Verfahren erhältlichen Benzylidenmalonsäurepolyester.

$\overline{M}n$ kann in bekannter Weise mittels Dampfdruckosmose oder Gelchromatographie gemessen werden.

Bevorzugte Polyester sind solche der Formel (II)

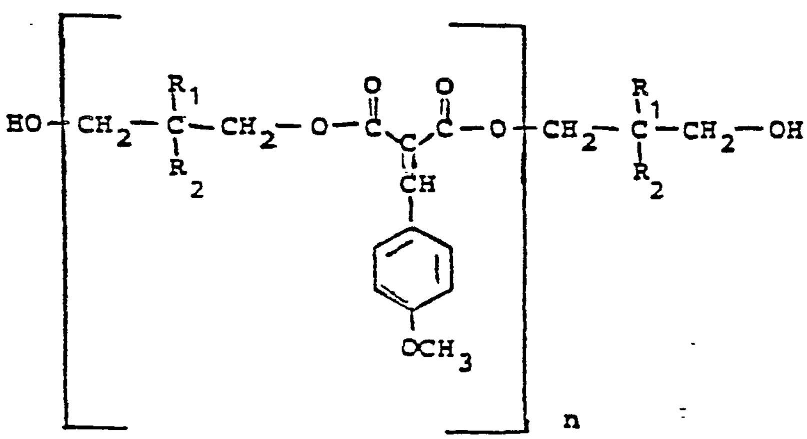

(II)

worin

$R_1$ Methyl oder Ethyl,

$R_2$ Methyl, Ethyl oder Propyl und

« n » eine ganze Zahl von 3 bis 30, vorzugsweise von 10 bis 25 sind, was einem $\overline{M}n$ von etwa 2 000 bis 8 450 entspricht.

Gegenstand der vorliegenden Erfindung ist außerdem die Verwendung von Benzylidenmalonsäurepolyestern mit Struktureinheiten der Formel (I)

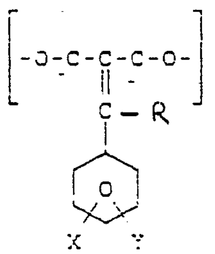

(I)

worin

R = H, $C_1$-$C_4$-Alkyl oder Phenyl und

X und Y gleich oder verschieden sein können und H, OH, Methoxy, Phenoxy, $C_1$-$C_4$-Alkyl, Phenyl, Cl oder Br sind,

mit Molekulargewichten $\overline{M}n$ von 970 bis 9 000, einer OH-Zahl von 5-115 und einer COOH-Zahl von 0-8, zur UV-Stabilisierung von thermoplastischen Kunststoffen.

Die zum Aufbau der erfindungsgemäß zu verwendenden Polyester geeigneten Dihydroxyverbindungen sind aliphatische und/oder cycloaliphatische Dihydroxyverbindungen und/oder Diphenole, wobei als Verzweiger mehr als zweiwertige Alkohole, vorzugsweise aliphatische Triole oder aliphatische Tetraole in Mengen von 0 bis 20 Mol.-%, vorzugsweise 5 bis 15 Mol.-%, bezogen auf Mole Dihydroxyverbindungen, eingesetzt werden können.

Die Herstellung der erfindungsgemäß zu verwendenden Polyester mit Struktureinheiten der Formel (I) ist einmal möglich aus Malonsäurepolyestern und den Aldehyden bzw. Ketonen der Formel (III)

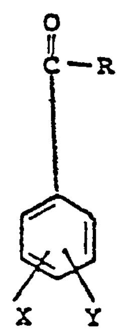

(III)

worin R, X und Y die für Formel (I) genannte Bedeutung haben, nach einer Knoevenagel-Reaktion. Dabei kann auf bekannte allgemeine Reaktionsvorschriften zurückgegriffenwerden, wie sie z. B. in Organikum, VEB Deutscher Verlag der Wissenschaften, Berlin, 7. Auflage, in Kapitel 7.2.4 Seite 444-447 aufgeführt sind.

Die Herstellung eines der hierbei als Ausgangsprodukte einzusetzenden Malonsäurepolyesters, nämlich des Malonsäureethylenglykolpolyesters aus Malonsäurediethylester und Ethylenglykol wird in Carothers, Aroin J. Am. Chem. Soc. 51, 2560 (1929) beschrieben.

Analog können auch andere Malonsäureausgangspolyester hergestellt werden. Zur Herstellung dieser Polyester werden bevorzugt saure Katalysatoren, wie sie für Ver- und Umesterungsreaktionen allgemein bekannt sind, z. B. p-Toluolsulfonsäure, eingesetzt. Dabei wird die Katalysatorkonzentration möglichst niedrig, bevorzugt bei 0,65 bis 0,02 Gew.-%, bezogen auf Summe der Reaktanten, eingesetzt, um einerseits ein farbloses Produkt andererseits noch eine zügige Reaktion zu erhalten.

Die Malonsäureausgangspolyester können durch die Mitverwendung von bis zu 20 Mol-%, vorzugsweise 5 bis 15 Mol-%, bezogen auf Mole Dihydroxyverbindungen, mehr als zweiwertigen Alkoholen, vorzugsweise aliphatischen Triolen oder aliphatischen Tetraolen, verzweigt sein.

Bei der Knoevenagel-Reaktion liegt das Reaktantenverhältnis —$CH_2$-Gruppe im Malonsäureaus-

gangspolyester zu $\overset{\overset{O}{\|}}{C}$-Gruppe von Verbindung (III) zwischen 1 : 1 und 1 : 1,2. Man verwendet als Katalysatoren typische Knoevenagel-Katalysatoren wie Piperidin/Eisessig oder Ammoniumacetat oder n-Butylamin/Eisessig ; als Lösungsmittel sind beispielsweise aromatische Kohlenwasserstoffe wie Benzol, Toluol oder Xylole geeignet. Die Anwendung von Überdruck oder Vakuum ist im allgemeinen nicht erforderlich.

Ein weiteres Verfahren zur Herstellung der erfindungsgemäß verwendeten Polyester mit Struktureinheiten der Formel (I) ist die Polykondensation von Diestern der Formel (Ia),

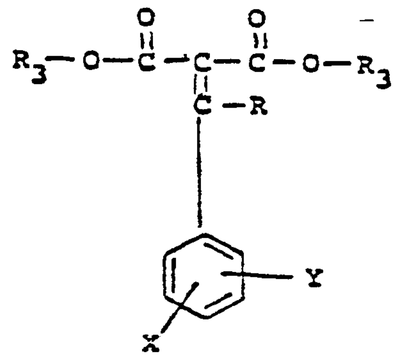

(Ia)

worin R, X und Y die für Formel (I) genannte Bedeutung haben und $R_3$ Methyl oder Ethyl ist, mit aliphatischen und/oder cycloaliphatischen Dihydroxyverbindungen und gegebenenfalls mehr als zweiwertigen Alkoholen, vorzugsweise aliphatischen Triolen oder aliphatischen Tetraolen als Verzweigern in Mengen bis 20 Mol-%, vorzugsweise 5 bis 15 Mol-%, bezogen auf Mole Dihydroxyverbindungen, bei Temperaturen von 150-190 °C in Gegenwart von sauren oder basischen Umesterungskatalysatoren wie z. B. Orthotitansäuretetrabutylester oder Kalium.-tert.-butylat unter Stickstoff.

Die Reaktionsdauer bei der ersten Herstellungsvariante ist etwa zwischen 5 und 10 Stunden, bei der zweiten Reaktionsvariante ist die Reaktionsdauer in etwa die gleiche. Die Isolierung und Reinigung der Polyester mit Struktureinheiten der Formel (I) erfolgt in bekannter Weise beispielsweise durch Wäsche mit Wasser und Ausfällen mit Methanol.

Das erstgenannte Herstellungsverfahren ist bevorzugt, weil es zu höchermolekulareren Produkten führt, die darüber hinaus noch durch eine deutlich niedrigere Jodfarbzahl gekennzeichnet sind.

Für die erfindungsgemäße UV-Stabilisierung geeignete thermoplastische Kunststoffe sind, vorzugsweise thermoplastische aromatische Polycarbonate, thermoplastische aromatische Polyester und thermoplastische Poly-$C_1$-$C_4$-alkyl-methacrylate.

Bevorzugte Mengen für die Verwendung an Polyester mit Struktureinheiten der Formel (I) liegen von 0,1 bis 1 Gew.-%, bezogen auf Gewicht an Thermoplast.

Die Einarbeitung der erfindungsgemäß zu verwendenden polymeren UV-Absorber mit Struktureinheiten der Formel (I) in die thermoplastischen Kunststoffe erfolgt nach bekannten Techniken, z. B. durch Zugabe des polymeren UV-Absorbers in Substanz in die Polymerschmelze des thermoplastischen Kunststoffs oder durch Auftrudeln des polymeren UV-Absorbers auf den festen Kunststoff (Granulat) und anschließende Extrusion bei der Schmelztemperatur oder durch Herstellen einer Kunststoffkombination mit hohem Gehalt an UV-Absorbern (Master Batch) und anschließendes Vermischen dieser Konzentrate mit weiterem Kunststoff.

Gegenstand der vorliegenden Erfindung ist somit auch ein Verfahren zur UV-Stabilisierung von thermoplastischen Kunststoffen, vorzugsweise von thermoplastischen, aromatischen Polycarbonaten, thermoplastischen, aromatischen Polyestern oder thermoplastischen Poly-$C_1$-$C_4$-alkylmethacrylaten, indem man die thermoplastischen Kunststoffe mit polymeren UV-Absorbern in den für die UV-Stabilisierung geeigneten Mengen, vorzugsweise in Mengen von 0,1 bis 1 Gew.-%, bezogen auf Gewicht an thermoplastischen Kunststoff, entweder direkt bei Temperaturen zwischen 250 °C und 320 °C in bekannter Weise homogenisiert oder über die Zwischenstufe eines 5 bis 10 gewichtsprozentigen Konzentrats in eben diesen thermoplastischen Kunststoffen auf die gleiche Weise bei Temperaturen zwischen 250 °C und 320 °C einarbeitet, das dadurch gekennzeichnet ist, daß man polymere UV-Absorber mit Struktureinheiten der Formel (I) einsetzt.

Gegenstand der vorliegenden Erfindung sind auch UV-stabilisierte, thermoplastische Kunststoffe, vorzugsweise thermoplastiche, aromatische Polycarbonate, thermoplastische, aromatische Polyester oder thermoplastische Poly-$C_1$-$C_4$-alkyl-methacrylate mit einem Gehalt an Polyestern mit Struktureinheiten der Formel (I), vorzugsweise mit einem Gehalt an 0,1 bis 1 Gew.-%, bezogen auf Gewicht an Thermoplast.

Polymere UV-Absorber und ihre Verwendung zur UV-Stabilisierung von Kunststoffen, insbesondere von thermoplastischen Polycarbonaten sind bekannt (siehe DE-OS 22 31 531 und DE-OS 22 31 532). Die darin beschriebenen polymeren UV-Absorber sind jedoch C-C-Polymerisate mit Esterseitengruppen, während die Polyester der vorliegenden Erfindung die Esterbindungen in der Hauptkette haben.

Die polymeren UV-Absorber gemäß DE-OS 22 31 531 und gemäß DE-OS 22 31 532 sind sublimationsfest, zeigen den Vorteil, daß die Extinktionskoeffizienten der Polymerisate unter Berücksichtigung des UV-absorbierenden Anteils immer deutlich über den Extinktionskoeffizienten der entsprechenden Monomermischungen liegen (Seiten 3 und 4 der DE-OS 22 31 531). Darüber hinaus stabilisieren sie auch z. B. mit $TiO_2$ pigmentierte Polycarbonat-Formmassen, ohne daß ein Molekulargewichtsabbau, und ohne daß ein Abfall der mechanischen Eigenschaften beobachtet wird (Seite 2 der DE-OS 22 31 532).

Nachteilig bei Verwendung dieser polymeren UV-Absorber ist jedoch, daß die UV-Schutzwirkung geringer ist, als die von entsprechenden handelsüblichen monomeren UV-Absorbern, wie beispielsweise folgender Vergleich der Verbindungen A und B zeigt :

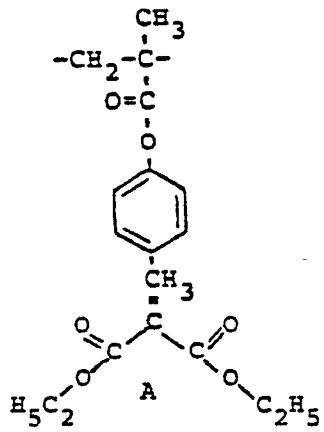
A

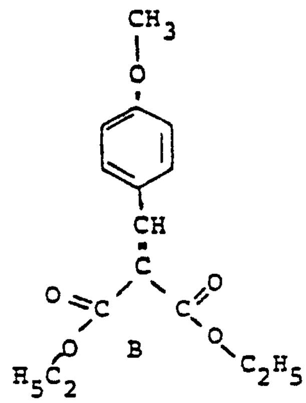
B

Transmissionswerte nach Bewitterung (1 200 Std) und Belichtung (1 000 Std) bei 420 nm ($\tau_{420}$/[%])

| UV-Absorber | Hg-Lampe $\lambda_{420}$ (%) | WOM $\lambda_{420}$ (%) |
|---|---|---|
| ohne | 35 % | 63 % |
| Verbindung (B) (0.5 Gew.-%) | 53,5 % | 72,5 % |
| Verbindung (A) (0.5 Gew.-%) | 38,0 % | 67,0 % |

Bei der Verwendung der polymeren UV-Absorber mit Struktureinheiten der Formel (I) ist dies dagegen nicht der Fall.

In Journal of Polymer Science 11, Nr. 7, 1973, Seiten 1733 bis 1752 werden zwar Polyester der erfindungsgemäß zu verwendenden Art beschrieben ; die Verwendung derartiger Polyester zur UV-Stabilisierung von thermoplastischen Kunststoffen geht daraus jedoch nicht hervor, vielmehr ist Ziel dieser Publikation die Herstellung von photoempfindlichen und photovernetzbaren Polymeren.

Aus der französischen Patentschrift 1 137 056 sind vinyloge Benzylidenmalonsäurepolyester bekannt, die als Photosensibilisatoren in der Fotographie Verwendung finden. Bei Verwendung dieser Verbindungen zur UV-Stabilisierung von thermoplastischen Kunststoffen erhält man schlechtere Ergebnisse als bei der erfindungsgemäßen Verwendung der Verbindungen mit Struktureinheiten der Formel (I), obwohl diese Verbindungen eine längere Kette konjugierter Doppelbindungen enthalten.

Aus der französischen Patentschrift 2219930 sind monomere UV-Absorber vom Typ der 4-Phenylbenzylidenmalonsäureester bekannt. Derartige monomere UV-Absorber verursachen jedoch einen gewissen Abfall der mechanischen Eigenschaften.

Geeignete Malonsäureausgangspolyester zur Herstellung der erfindungsgemäß einzusetzenden UV-Absorber sind beispielsweise die durch literaturbekannte Umesterung aus Malonsäurediethylester und aliphatischen Diolen und/oder cycloaliphatischen Diolen und/oder Diphenolen erhaltenen Produkte.

Geeignete aliphatische Diole sind : Ethylenglykol, Diethylenglykol, Tetraethylenglykol, 1,2-Propandiol, 1,3-Propandiol, 1,2-Butandiol, 1,3-Butandiol, 2,3-Butandiol, 1,4-Butandiol, 2,2-Dimethyl-1,3-propandiol, 1,5-Pentandiol, 1,6-Hexandiol, 2,5-Hexandiol, 2-Methyl-2-propyl-1,3-propandiol, 2,2-Diethyl-1,3-propandiol, 2-Ethyl-1,3-hexandiol, 1,12-Octadecandiol und 1,4-Cyclohexandimethanol. Geeignete cycloaliphatische Diole sind beispielsweise 1,4-Cyclohexandiol und Perhydrobisphenol-A ; geeignete Diphenole sind beispielsweise 2,2-Bis-(4-hydroxyphenyl)-propan (Bisphenol A), 1,1-Bis-(4-hydroxyphenyl)-cyclohexan, 2,2-Bis-(3,5-di-dichlor-4-hydroxyphenyl)-propan, 4,4'-Dihydroxy-diphenyl und Hydrochinon.

Geeignete mehr als zweiwertige Alkohole sind beispielsweise Trimethylolpropan, Glycerin oder Pentaerythrit.

Bevorzugte Malonsäurepolyester zur Herstellung der erfindungsgemäß zu verwendenden UV-Absorber sind solche der Formel (IV)

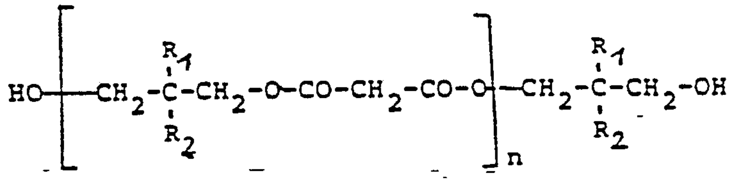

(IV)

worin $R_1$, $R_2$ und « n » die Bedeutung von Formel (II) haben.

Ganz besonders bevorzugte Malonsäurepolyester sind solche der Formel (IV), worin $R_1 = R_2 = CH_3$ und « n » eine ganze Zahl von 10 bis 25 sind.

Die zur Herstellung der erfindungsgemäß verwendeten UV-Absorber der Formel I einzusetzenden Malonsäureausgangspolyester sollen mittlere Molekulargewichte $\overline{M}n$ (Zahlenmittel) von etwa 500 bis etwa 5 000 (gemessen in bekannter Weise mittels Dampfdruckosmose oder Gelchromatographie) haben ; sie haben OH-Zahlen von 5 bis 20 und Säurezahlen von 2 bis 9.

Geeignete Aldehyde bzw. Ketone der Formel (III) sind beispielsweise 4-Methoxybenzaldehyd, 4-Hydroxybenzaldehyd, 4-Phenyl-benzaldehyd, 4-Hydroxy-2-methoxy-benzaldehyd,. Acetophenon, und Benzophenon, besonders bevorzugt sind 4-Methoxy-benzaldehyd und 4-Phenyl-benzaldehyd.

Geeignete Dieester der Formel (Ia) sind beispielsweise
4-Methoxybenzylidenmalonsäurediethylester,
4-Methoxybenzylidenmalinsäuredimethylester,
4-Hydroxybenzylidenmalonsäurediethylester,
4-Hydroxybenzylidenmalonsäuredimethylester,
4-Phenylbenzylidenmalonsäurediethylester und
4-Phenylbenzylidenmalonsäuredimethylester.

Die bereits zur Herstellung der Malonsäureausgangspolyester genannten aliphatischen und cycloaliphatischen Diole und mehr als zweiwertigen Alkohole eignen sich auch als Reaktionskomponenten zur Herstellung der erfindungsgemäß zu verwendenden polymeren UV-Absorber nach der zweiten Herstellungsvariante aus den Diestern der Formel (Ia).

Für die Herstellung der polymeren UV-Absorber der Formel I bzw. der Ausgangsmalonsäurepolyester sind bevorzugte Dihydroxyverbindungen 2,2-Dimethyl-1,3-propandiol, 2-Methyl-2-propyl-1,3-propandiol und 2,2-Diethyl-1,3-propandiol, besonders bevorzugte Dihydroxyverbindungen sind 2,2-Dimethyl-1,3-propandiol.

Die erfindungsgemäß zu verwendenden Benzylidenmalonsäurepolyester mit Struktureinheiten der Formel (I) sind je nach Molekulargewicht zähe und harzartige oder spröde und glasartige Produkte. Bevorzugt sind spröde und glasartige Polyester mit Erweichungspunkten von 30 bis 70 °C.

Einige der erfindungsgemäß zu verwendenden Benzylidenmalonsäurepolyester sind beispielsweise p-Methoxybenzylidenmalonsäure-neopentylglykolpolyester ($\overline{M}n$ ca. 3 500), p-Methoxybenzylidenmalonsäureadipolpolyester, p-Methylbenzylidenmalonsäure-neopentylglykolpolyester ($\overline{M}n$ ca. 3 500) und p-Chlorbenzylidenmalonsäure-neopentylglykolpolyester.

Geeignete thermoplastische Kunststoffe zur UV-Stabilisierung sind beispielsweise außer den bereits erwähnten bevorzugten aromatischen Polycarbonaten, aromatischen Polyestern und den thermoplastischen Poly-$C_1$-$C_4$-alkylmethacrylaten weitere thermoplastische, transparente Kunststoffe wie Celluloseester, PVC oder spezielle Polystyrole.

Bevorzugt zu stabilisierende thermoplastische aromatische Polycarbonate, sind die durch Umsetzung von Diphenolen, insbesondere von Dihydroxydiarylalkanen, mit Phosgen oder Diestern der Kohlensäure erhältlichen Polykondensate, wobei außer den unsubstituierten Dihydroxydiarylalkanen auch solche geeignet sind, deren Arylreste in o- und/oder m-Stellung zur Hydroxylgruppe Methylgruppen oder Halogenatome tragen. Ebenso sind verzweigte Polycarbonate geeignet. Als Kettenabbrecher dienen beispielsweise Monophenole. Als Verzweiger beispielsweise Trisphenole oder Tetraphenole.

Die zu stabilisierenden Polycarbonate haben mittlere Gewichtsmittelmolekulargewichte $\overline{M}w$ zwischen 10 000 und 100 000, vorzugsweise zwischen 20 000 und 40 000, ermittelt durch Messungen der rel. Viskosität in $CH_2Cl_2$ bei 25 °C und einer Konzentration von 0,5 g/pro 100 ml.

Geeignete Diphenole sind z. B. Hydrochinon, Resorcin, 4.4'-Dihydroxydiphenyl, Bis-(hydroxy-phenyl) alkane wie beispielsweise $C_1$-$C_8$-Alkylen- bzw. $C_2$-$C_8$-Alkylidenbisphenole, Bis-(hydroxyphenyl)-cycloalkane wie beispielsweise $C_5$-$C_{15}$-Cycloalkylen- bzw. $C_5$-$C_{15}$-Cycloalkylidenbisphenole, Bis-(hydroxy-phenyl)-sulfide, -ether, -ketone, -sulfoxide oder -sulfone. Ferner $\alpha,\alpha'$-Bis-(hydroxyphenyl)-diisopropylbenzol sowie die entsprechenden kernalkylierten bzw. kernhalogenierten Verbindungen. Bevorzugt sind Polycarbonate auf Basis Bis-(4-hydroxyphenyl)-propan-2.2 (Bisphenol A), Bis-(4-hydroxy-3,5-dichlor-phenyl)-propan-2.2 (Tetrachlorbisphenol A), Bis-(4-hydroxy-3,5-dibromphenyl)-propan-2.2 (Tetrabrombisphenol A), Bis-(4-hydroxy-3.5-dimethyl-phenyl)-propan-2.2 (Tetramethylbisphenol A), Bis-(4-hydroxy-phenyl)-cyclohexan-1.1 (Bisphenol Z) sowie auf Basis von Dreikernbisphenolen wie $\alpha,\alpha'$-Bis-(4-hydroxyphenyl)-p-diisopropylbenzol. Weitere geeignete Diphenole sowie die Herstellung der Polycarbonate sind beispielsweise in den US-Patenten 30 28 365, 30 62 781 und 38 79 347 beschrieben.

Bevorzugt zu stabilisierende thermoplastische aromatische Polyester sind solche auf Basis von Diphenolen, Terephthal- und Isophthalsäuredichloriden (Säurechloridverhältnis 7 : 3 bis 3 : 7, vorzugsweise 1 : 1) Kettenabbrechern und gegebenenfalls Verzweigungsmitteln. Als Diphenole, Kettenabbrecher und Verzweiger dienen die für die Polycarbonatherstellung vorstehend genannten Verbindungen.

Die Herstellung der aromatischen Polyester erfolgt aus den Gemischen der Säurechloride, Diphenole, Kettenabbrecher und gegebenenfalls Verzweiger nach dem Verfahren der Phasengrenzflächenpolykondensation. Die relative Lösungsviskosität der erfindungsgemäß zu stabilisierenden aromatischen Polyester soll zwischen 1.18 und 2.0, vorzugsweise zwischen 1.2 und 1.5, liegen (gemessen in einer $CH_2Cl_2$-Lösung bei 25 °C und einer Konzentration von 0,5 g/pro 100 ml).

Bevorzugt zu stabilisierende thermoplastischen Poly-$C_1$-$C_4$-alkyl-methacrylate sind Polymere von Methacrylsäure-$C_1$-$C_4$-alkylestern, also beispielsweise des Methyl-, Ethyl-, Propyl- oder Butylmethacrylsäureesters, vorzugsweise des Methyl- oder Ethyl-methacrylsäureesters. Es sind sowohl Homopolymerisate als auch Copolymerisate dieser Methacrylsäureester darunter zu verstehen. Darüber hinaus können bis maximal 9,5 Gew.-% andere ethylenisch ungesättigte, copolymerisierbare Monomere, bezogen jeweils auf Gesamtgewicht an diesen ungesättigten Monomeren und den Methacrylsäureestern, copolymerisiert sein, so daß die erfindungsgemäß zu stabilisierenden $C_1$-$C_4$-Alkyl-methacrylatpolymeren aus 90,5 Gew.-% bis 100 Gew.-% an Alkyl-methacrylat-Einheiten und aus 9,5 Gew.-% bis 0 Gew.-% an anderen ethylenisch ungesättigten Monomereinheiten aufgebaut sind.

Andere ethylenisch ungesättigte copolymerisierbare Monomere sind beispielsweise (Meth)Acrylnitril, ($\alpha$-Methyl) Styrol, Bromstyrol, Vinylacetat, Acrylsäure-$C_1$-$C_8$-alkylester, (Meth)Acrylsäurearylester, (Meth)Acrylsäure, Ethylen, Propylen, N-Vinylpyrrolidon, Vinylsulfonsäure(salze) oder Styrolsulfonsäure(salze).

Die erfindungsgemäß bevorzugt zu stabilisierenden Polymethacrylate stellen in bestimmten organischen Lösungsmitteln lösliche Stoffe dar und besitzen somit einen lineraren oder verzweigten Aufbau.

Die erfindungsgemäß bevorzugt zu stabilisierenden Polymethacrylate können nach bekannten Polymerisationsverfahren hergestellt werden, vorzugsweise aber durch radikalische oder thermische Polymerisation. Als Polymerisationsverfahren eignen sich Verfahren in Emulsion, Masse, Suspension, Dispersion, insbesondere die Emulsions-, vorzugsweise aber die Masse- beziehungsweise Lösungspolymerisation. Die Molekulargewichte der Polymethacrylate können durch bekannte verfahrensbedingte Maßnahmen beispielsweise durch Verwendung von Mercaptanen als Regler in weiten Bereichen variiert werden. Üblicherweise besitzen die erfindungsgemäß bevorzugt zu stabilisierenden Polymethacrylate Molekulargewichte (beziehungsweise Staudinger-Indices, beziehungsweise Schmelzviskositäten), die deren thermoplastische Spritzguß- oder Extrusionsverarbeitung sinnvoll machen.

Erfindungsgemäß zu stabilisierende Celluloseester werden nach üblichen Verfahren durch Veresterung der Cellulose mit aliphatischen Monocarbonsäureanhydriden, vorzugsweise Essigsäure- und Buttersäure- oder Essigsäure- und Propionsäureanhydrid, gewonnen. Die in der Rohlösung durch zuführende Hydrolyse wird durch einen geringen Wasserüberschuß so gesteuert, daß ein geringer Hydroxylgehalt (4 bis 25) erhalten wird. Die oxydative Bleiche des aus der Lösung isolierten Celluloseesters muß so durchgeführt werden, daß im Endprodukt kein Oxydationsmittel mehr nachweisbar ist ; gegebenenfalls muß eine Nachbehandlung mit Reduktionsmitteln erfolgen.

Zur Bestimmung der OH-Zahl werden die freien Hydroxylgruppen des Celluloseesters mit Acetanhydrid in Pyridin verestert, der Überschuß Anhydrid mit Wasser umgesetzt und zurücktitriert [Vorschrift : C. J. Mahn, L. B. Genung und R. F. Williams, Analysis of Cellulose Derivatives, Industrial and Engineering Chemistry, Vol. 14, Nr. 12, 935-940 (1942)].

Die Viskosität der Celluloseester soll 0,03 bis 0,05 Pas (0,3 bis 0,5 Poise), gemessen als 20 Gew.-%ige Lösung in Aceton, betragen. Vorzugsweise zu verwendende Celluloseester weisen im Falle der Acetobutyrate einen Essigsäuregehalt von 17 bis 23 Gew.-% und einen Buttersäuregehalt von 45 bis 50 Gew.-%, im Falle der Acetopropionate einen Propionsäuregehalt von 61-69 Gew.-% und einen Essigsäuregehalt von 2 bis 7 Gew.-% auf. Die OH-Zahlen liegen üblicherweise zwischen 4 und 25. Die mittleren Gewichtsmittel der Molekulargewichte $\overline{M}w$ liegen zwischen 10 000 und 1 000 000, vorzugsweise zwischen 100 000 und 500 000.

Erfindungsgemäß zu stabilisierendes PVC ist sowohl Emulsions-, Suspensions- als auch Masse-PVC. Die K-Werte nach Fikentscher, gemessen in Cyclohexanon (1 %ige Lösung bei 23 °C), liegen zwischen 50 und 80.

Erfindungsgemäß zu stabilisierende spezielle transparente Polystyrole sind Homopolymerisate des Styrols oder Mischpolymerisate des Styrols mit vorzugsweise Acrylnitril und/oder Butadien, und/oder Malonsäureester, die z. B. durch Suspensionspolymerisation in Gegenwart von Katalysatoren aus den Monomeren bzw. der Mischung der Monomeren mit $\overline{M}w$ von 10.000-600.000 erhalten werden. ($\overline{M}w$ wird gemessen in DMF bei c = 5 g/l und 20 °C). (Literatur dazu siehe : Beilsteins Handbuch der Organischen Chemie, vierte Auflage, Drittes Ergänzungswerk, Bd. 5. Seiten 1163-1169, Springer Verlag 1964, H. Ohlinger, Polystyrol, 1. Teil, Herstellungsverfahren und Eigenschaften der Produkte, Springer Verlag 1955).

Die Verarbeitung der thermoplastischen Kunststoffe mit den eingearbeiteten erfindungsgemäßen polymeren UV-Absorbern kann zu verschiedensten Formkörpern, insbesondere Folien und Platten, beispielsweise auch Stegdoppelplatten gemäß EP-OS 0 054 856 mit den bekannten Methoden der

Extrusion oder des Gießens erfolgen. Die Extrusion kann mit oder ohne Anwendung von Vakuum in üblichen Extrudern bei Temperaturen von 250 °C bis 320 °C erfolgen in Anlehnung an die Art des zu extrudierenden Kunststoffs. Ein Ausdampfen des erfindungsgemäßen UV-Absorbers tritt dabei praktisch nicht auf.

Eine besonders günstige Applikation der erfindungsgemäßen polymeren UV-Absorber ist der Einsatz in thermoplastischen Polycarbonatfilmen in Konzentrationen von 1 Gew.-% bis 15 Gew.-%, vorzugsweise 3 Gew.-% bis 7 Gew.-%, bezogen auf das Gewicht des Films, welche in einer Dicke von 10 bis 100 µm, vorzugsweise 20 bis 50 µm, zur Beschichtung von Formteilen aus thermoplastischen Kunststoffen, beispielsweise aus den oben genannten thermoplastischen Polycarbonaten, aromatischen Polyestern oder thermoplastischen Polymethylmethacrylaten dienen. Derartige Beschichtungen und ihre Aufbringung sind bekannt (siehe beispielsweise DE-OS 1 694 274 und DE-OS 2 832 676). Besondere Vorteile sind für die Coextrusion von mehrschichtigen Systemen im Vakuum gegeben, vor allem im Vergleich zum Einsatz von monomeren Benzylidenmalonsäureestern gemäß DE-PS 1 087 902 oder DE-OS 2 310 135, welche vor allem bei der Vakuumextrusion wegen ihres Ausdampfens zu Problemen für die Apparatur und die Qualität der extrudierten Formkörper führen können.

Ein weiterer Gegenstand der vorliegenden Erfindung sind somit Filme mit Dicken von 10 bis 100 µm, vorzugsweise 20 bis 50 µm aus thermoplastischen, aromatischen Polycarbonaten mit einem Gehalt von 1 Gew.-% bis 15 Gew.-%, vorzugsweise 3 Gew.-% bis 7 Gew.-%, an den erfindungsgemäßen Benzylidenmalonsäurepolyestern mit Struktureinheiten der Formel (I), bezogen auf das Gewicht des Films.

Ein weiterer Gegenstand der Erfindung ist die Verwendung derartiger Polycarbonatfilme zur Beschichtung von Formteilen aus thermoplastischen Kunststoffen, insbesondere mit dem Verfahren der Coextrusion.

Besonders geeignete Formteile für die Beschichtung sind beispielsweise Kohlkammerplatten oder Doppelstegplatten gemäß EP-OS 0 054 856.

Es ist bekannt, daß monomere Verbindungen vom Typ Benzylidenmalonester, z. B. 4-Phenylbenzylidenmalonsäurediethylester, eine geringere Lichtschutzwirkung haben als UV-Absorber vom Typ Benzotriazol, z. B. 2-(2-Hydroxy-3-tert.-butyl-5-sec.-butylphenyl)-benztriazol. Daher werden monomere Benzylidenmalonester üblicherweise in ca. 50 % größeren Konzentrationen eingesetzt als Benztriazole. Die erfindungsgemäßen polymeren UV-Absorber zeigen nun nicht nur eine verbesserte stabilisierende Wirkung als die entsprechenden monomeren Lichtschutzmittel, sondern es wird eine Lichtschutzwirkung erzielt, die sogar besser ist als die von z. Z. marktüblichen Benztriazolen, z. B. 2-(2-Hydroxy-3-tert.-butyl-5-sec.-butyl-phenyl)-benztriazol (siehe Beispiel C. 1).

Es ist weiterhin bekannt, daß monomere Verbindungen vom Typ Benzylidenmalonester z. B. 4-Phenylbenzylidenmalonsäure-diethylester einen gewissen Abfall der mechanischen Eigenschaften, z. B. Kerbschlagzähigkeit in Kunststoffen hervorrufen. Überraschenderweise zeigen die erfindungsgemäßen UV-Absorber bei vergleichbaren Konzentrationen eine bessere Kerbschlagzähigkeit (siehe Beispiel C. 2).

Die erfindungsgemäß zu verwendenden polymeren UV-Absorber sind außerdem auch gegenüber Regenwasser extraktionsstabiler als monomere marktübliche Lichtschutzmittel, insbesondere als Hydroxyphenylbenzotriazole.

Den erfindungsgemäß stabilisierten Thermoplasten können noch die für die jeweiligen Thermoplasten üblichen Stabilisatoren, Antioxydantien, Entformungsmittel und Flammschutzmittel, beispielsweise Phenole, Metall-Desaktivatoren, sterich gehinderte Amine zugesetzt werden.

Die erfindungsgemäß stabilisierten Thermoplaste werden bevorzugt in Bereichen eingesetzt, die einer hohen Lichteinwirkung ausgesetzt sind, also beispielsweise beim Bau von Gewächshäusern, für elektrische Lampen, für Mobilar und Verschalung von Freiluftanlagen.

## Beispiele

A. 1. Herstellung eines Malonsäurepolyesters aus 2.2-Dimethyl-1.3-propandiol und Malonsäurediethylester.

3 200 g Malonsäurediethylester und 2 080 g 2,2-Dimethyl-1,3-propandiol (Neopentylglykol) werden in einem Rührkessel auf 140-150 °C erhitzt, so daß Ethanol abdestilliert. Nachdem die Hälfte der berechneten Mente abdestilliert ist, erhitzt man bei 170-180 °C 1 Stunde zum Rückfluß. Anschließend wird erneut Ethanol abdestilliert und Wasserstrahlvakuum angelegt. Man erhält 3 189 g (93 %) hochviskosen Malonsäurepolyester. $\overline{M}n$ 2 800 (ermittelt nach Dampfdruckosmose), OH-Zahl 24-25, Säurezahl 2-3.

B. 1. Herstellung eines Benzylidenmalonsäurepolyesters aus obigem Malonsäurepolyester (A.1).

Eine Lösung von 903 g Malonsäureneopentylglykolpolyester, 714 g Anisaldehyd, 47.1 g β-Alanin sowie 47.4 g Eisessig in 2 600 ml Toluol wird 12 Stunden am Wasserabscheider gekocht. Nach Filtration und Abdestillieren des Lösungsmittels werden 2 l Methanol zugesetzt und bei 100 °C 1 Stunde am Rückfluß gerührt. Man trennt die Phasen und trocknet den Polyester 4 Stunden bei 150 °C im Wasserstrahlvakuum. Der so hergestellte Polyester besitzt ein Molekulargewicht $\overline{M}n$ von ca. 4 500 (ermittelt nach Gelchromatographie) ; OH-Zahl 11-13, Säurezahl $< 1$ ; Erweichungspunkt : 56 °C.

B. 2. Herstellung eines Benzylidenmalonsäurepolyesters nach dem Polykondensationsverfahren aus einem monomeren Benzylidenmalonsäureester.

Eine Mischung von 55,6 g p-Methoxybenzylidenmalonsäurediethylester (B), 32 g Trimethyl-1,6-hexandiol sowie 0,2 g K-tert.-Butylat wird auf 160-190 °C aufgeheizt, so daß Ethanol abdestilliert. Nachdem die berechnete Menge Ethanol entfernt ist, läßt man abkühlen. Der orangefarbene Rückstand erstarrt in der Kälte zu einer zähen Masse. Erweichungspunkt der Masse etwa 55 °C.

C. 1. Herstellung eines stabilisierten Polycarbonatformkörpers.

Granulatförmiges Bisphenol-A-Polycarbonat ($\eta$ rel = 1,310, gemessen in 0,5 g/100 ml $CH_2Cl_2$ bei 25 °C) wird mit 0,3 Gew.-% des 4-Methoxybenzylidenmalonsäureneopentylpolyesters aus Beispiel (B. 1) durch sogenanntes Auftrudeln vermischt. Danach wird das Granulat bei 300 °C in einem Doppelwellenextruder zu einem Strang extrudiert, der wiederum zu Granulat zerhackt wird. Aus diesem Granulat werden nach dem üblichen Extrusionsverfahren Hohlkammerplatten hergestellt.

Prüfung der UV-stabilisierenden Wirkung

In der oben beschriebenen Weise hergestellte, 10 mm dicke Hohlkammerplatten (HKp) wurden in einem Q.U.V.-Schnellbewitterungsgerät ($X_{max.}$ = 313 nm) über 3 000 Stunden bewittert. Zum Vergleich wurden 10 mm Hohlkammerplatten aus dem gleichen Polycarbonat mit einem Gehalt an 0,3 % 2-(2-Hydroxy-3-tert.-butyl-5-sec.-butylphenyl)-benztriazol, die ebenfalls in der oben beschriebenen Weise hergestellt wurden, mitgeprüft. Gemessen wurde der Lichttransmissionsgrad bei 450 nm. Die Prüfergebnisse sind Tabelle 1 zusammengefaßt.

Tabelle 1

| 10 mm HKP aus Polycarbonat mit | Lichttransmission bei 450 mn | | |
|---|---|---|---|
| | Ausgang | 1000 h | 3000 h |
| a) 0,3% 4-Methoxy-benzylidenneo-pentyl-polyester | 81.2 % | 77.7 % | 74.6 % |
| b) 0,3 % 2-(2-Hydroxy-3-tert.-butyl-5-sec.-butylphenyl)-benztriazol | 81,3 % | 76,7 % | 72,2 % |

C. 2. Herstellung eines stabilisierten Polycarbonatformkörpers.

Granulatförmiges Bisphenol-A-Polycarbonat ($\eta_{rel}$ = 1,310, gemessen in 0,5 g/100 ml $CH_2Cl_2$ bei 25 °C) wird mit 0,3 Gew.-%, 2 Gew.-% und 5 Gew.-% des 4-Methoxybenzylidenmalonsäureneopentylpolyesters aus Beispiel (B. 1) durch sogenanntes Auftrudeln vermischt. Danach wird das Granulat bei 300 °C in einem Doppelwellenextruder zu einen Strang extrudiert, der wiederum zu Granulat zerhackt wird. Aus diesem Granulat werden nach dem üblichen Spritzgußverfahren·Normkleinstäbe hergestellt. An diesen Normkleinstäben wird gemäß DIN 53 453 die Kerbschlagzähigkeit bestimmt. Die Ergebnisse sind in Tabelle 2 zusammengefaßt.

Als Vergleichsverbindung ist Verbindung (B), nämlich 4-Methoxybenzylidenmalonsäurediethylester analog eingearbeitet.

(Siehe Tabelle 2 Seite 10 f.)

Tabelle 2

Kerbschlagzähigkeit von Polycarbonat bei Zusatz von 4-Methoxybenzylidenmalonsäurediethylester (B) sowie von polymerem UV-Absorber gemäß Beispiel (B.1) in $mJ/mm^2$.

| Konzentration | 0,3 | 2 | 5 Gew.-% |
|---|---|---|---|
| UV-Absorber (B) | 30,1 | 16 | 5 |
| UV-Absorber (B.1) | 40 | 21 | 10 |

**Patentansprüche**

1. Verfahren zur Herstellung von Benzylidenmalonsäurepolyestern der Formel (Ib)

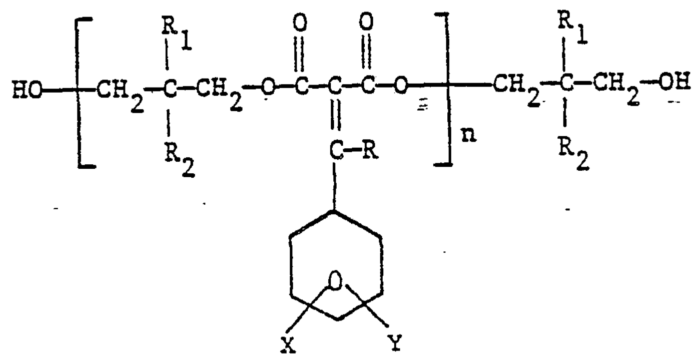

(Ib)

worin

R = H, $C_1$-$C_4$-Alkyl oder Phenyl,
$R_1$ Methyl oder Ethyl,
$R_2$ Methyl, Ethyl oder Propyl,
« n » eine ganze Zahl von 3 bis 30 und
X und Y gleich oder verschieden sein können und H, OH, Methoxy, Phenoxy, $C_1$-$C_4$-Alkyl, Phenyl, Cl oder Br sind,

mit Molekulargewichten $\overline{M}n$ von 970 bis 9 000, einer OH-Zahl von 5-115 und einer COOH-Zahl von 0-8, dadurch gekennzeichnet, daß man Malonsäurepolyester der Formel IV

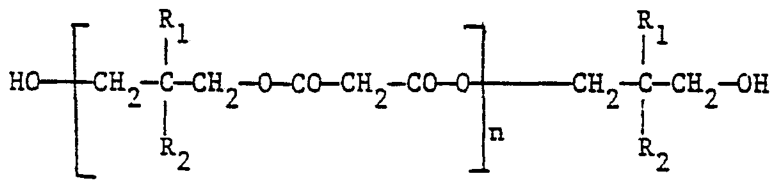

(IV)

worin $R_1$, $R_2$ und « n » die für Formel (Ib) genannte Bedeutung haben, mit $\overline{M}n$ von 500 bis 5 000 mit Aldehyden oder Ketonen der Formel (III)

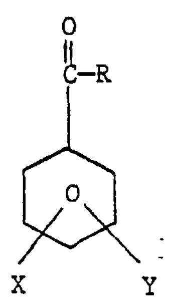

(III)

worin R, X und Y die für Formel (Ib) genannte Bedeutung haben, in der Art einer Knoevenagel Reaktion bei Temperaturen zwischen 20 °C und 150 °C, gegebenenfalls unter Zusatz eines inerten Lösungsmittels in Gegenwart eines Knoevenagel-Katalysators umsetzt.

2. Benzylidenmalonsäurepolyester, erhältlich gemäß Anspruch 1.

3. Benzylidenmalonsäurepolyester, dadurch gekennzeichnet, daß sie der Formel II

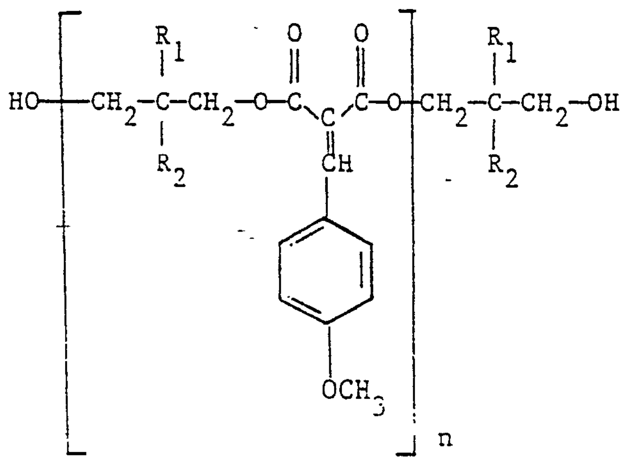

(II)

entsprechen, worin

$R_1$ Methyl oder Ethyl,

$R_2$ Methyl, Ethyl oder Propyl und

« n » eine ganze Zahl von 3 bis 30 sind.

4. Verwendung von Benzylidenmalonsäurepolyestern mit Struktureinheiten der Formel (I)

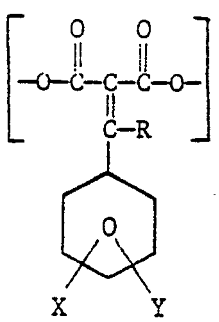

(I)

worin

R = H, $C_1$-$C_4$-Alkyl oder Phenyl und

X und Y gleich oder verschieden sein können und H, OH, Methoxy, Phenoxy, $C_1$-$C_4$-Alkyl, Phenyl, Cl oder Br sind,

mit Molekulargewichten $\overline{M}n$ von 970 bis 9 000, einer OH-Zahl von 5-115 und einer COOH-Zahl von 0-8, zur UV-Stabilisierung von thermoplastischen Kunststoffen.

5. Verfahren zur UV-Stabilisierung von thermoplastischen Kunststoffen, indem man die thermoplastischen Kunststoffe mit polymeren UV-Absorbern in den für die UV-Stabilisierung geeigneten Mengen entweder direkt bei Temperaturen zwischen 250 °C und 320 °C in bekannter Weise homogenisiert oder über die Zwischenstufe eines 5 bis 10 gewichtsprozentigen Konzentrats in eben diesen thermoplastischen Kunststoffen auf die gleiche Weise bei Temperaturen zwischen 250 °C und 320 °C einarbeitet, das dadurch gekennzeichnet ist daß man polymere UV-Absorber mit Struktureinheiten der Formel (I),

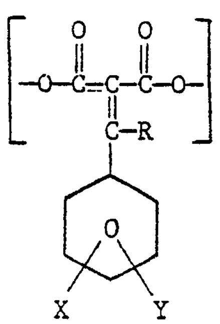

(I)

worin

R = H, $C_1$-$C_4$-Alkyl oder Phenyl und

X und Y gleich oder verschieden sein können und H, OH, Methoxy, Phenoxy, $C_1$-$C_4$-Alkyl, Phenyl, Cl oder Br sind,

mit Molekulargewichten $\overline{M}n$ von 970 bis 9 000, einer OH-Zahl von 5-115 und einer COOH-Zahl von 0-8, einsetzt.

6. UV-stabilisierte, thermoplastische Kunststoffe mit einem Gehalt an Benzylidenmalonsäurepolyestern mit Struktureinheiten der Formel (I)

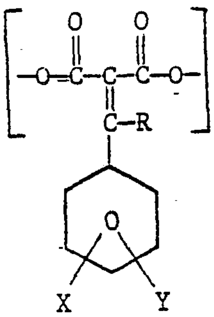

(I)

worin

R = H, $C_1$-$C_4$-Alkyl oder Phenyl und

X und Y gleich oder verschieden sein können und H, OH, Methoxy, Phenoxy, $C_1$-$C_4$-Alkyl, Phenyl, Cl oder Br sind,

mit Molekulargewichten $\overline{M}n$ von 970 bis 9 000, einer OH-Zahl von 5-115 und einer COOH-Zahl von 0-8.

7. Filme mit Dicken von 10 bis 100 µm aus thermoplastischen, aromatischen Polycarbonaten mit einem Gehalt von 1 Gew.-% bis 15 Gew.-%, bezogen auf das Gewicht des Films, an Benzylidenmalonsäurepolyestern mit Struktureinheiten der Formel (I)

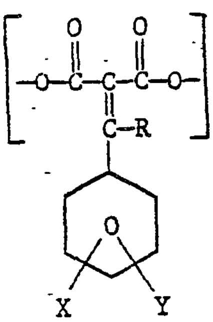

(I)

worin

R = H, $C_1$-$C_4$-Alkyl oder Phenyl und

X und Y gleich oder verschieden sein können und H, OH, Methoxy, Phenoxy, $C_1$-$C_4$-Alkyl, Phenyl, Cl oder Br sind,

mit Molekulargewichten $\overline{M}n$ von 970 bis 9 000, einer OH-Zahl von 5-115 und einer COOH-Zahl von 0-8.

8. Verwendung der Polycarbonatfilme des Anspruchs 7 zur Beschichtung von Formteilen aus thermoplastischen Kunststoffen.

## Claims

1. Process for the production of benzylidene malonic acid polyesters of the formula (Ib)

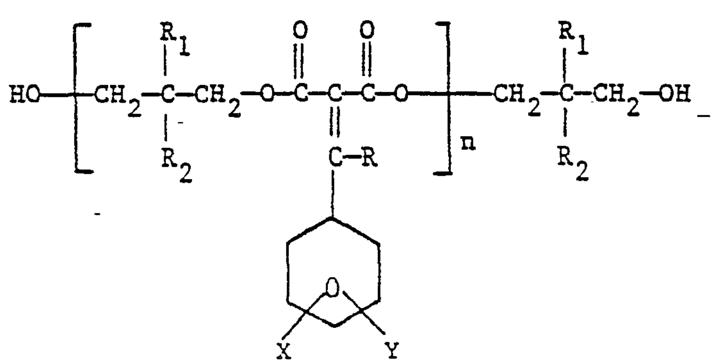

(Ib)

wherein

R = H, $C_1$-$C_4$-alkyl or phenyl,

$R_1$ is methyl or ethyl,

$R_2$ is methyl, ethyl or propyl,

« n » is an integer from 3 to 30 and

X and Y can be identical or different and are H, OH, methoxy, phenoxy, $C_1$-$C_4$-alkyl, phenyl, Cl or Br, with molecular weights $\overline{M}n$ of 970 to 9 000, an OH number of 5-115 and a COOH number of 0-8, characterised in that malonic acid polyesters of the formula IV

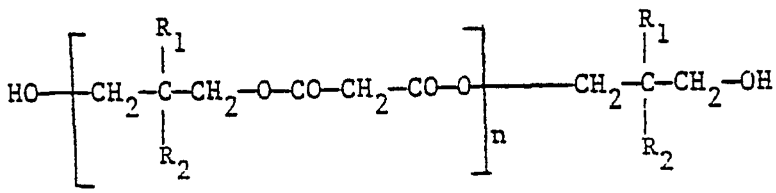
(IV)

wherein $R^1$, $R^2$ and « n » have the meaning given for formula (Ib), with $\overline{M}n$ of 500 to 5 000, are reacted with aldehydes or ketones of the formula (III)

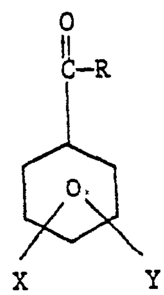
(III)

wherein R, X and Y have the meaning given for formula (Ib), in the manner of a Knoevenagel reaction at temperatures of between 20 °C and 150 °C, if appropriate with the addition of an inert solvent in the presence of a Knoevenagel catalyst.

2. Benzylidene malonic acid polyesters obtainable according to Claim 1.

3. Benzylidene malonic acid polyesters, characterised in that they correspond to the formula II

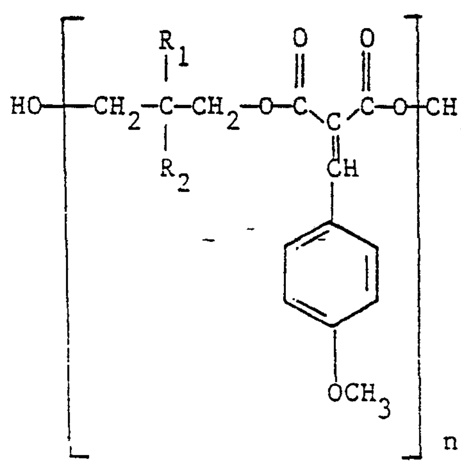
(II)

wherein

$R_1$ is methyl or ethyl,

$R_2$ is methyl, ethyl or propyl and

« n » is an integer from 3 to 30.

4. Use of benzylidene malonic acid polyesters containing structural units of the formula (I)

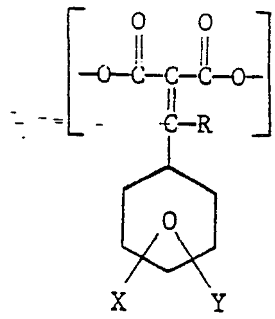

(I)

wherein
R = H, $C_1$-$C_4$-alkyl or phenyl and
X and Y can be identical or different and are H, OH, methoxy, phenoxy, $C_1$-$C_4$-alkyl, phenyl, Cl or Br, with molecular weights $\overline{M}n$ of 970 to 9 000, an OH number of 5-115 and a COOH number of 0-8, for the UV stabilisation of thermoplastic plastics.

5. Process for the UV stabilisation of thermoplastic plastics, in which the thermoplastic plastics are homogenised with polymeric UV absorbers in the quantities suitable for UV stabilisation either directly at temperatures between 250 °C and 320 °C in a known manner or are incorporated in the same manner at temperatures between 250 °C and 320 °C *via* the intermediate stage of a 5 to 10 per cent by weight concentrate in these same thermoplastic plastics, which is characterised in that polymeric UV absorbers containing structural units of the formula (I),

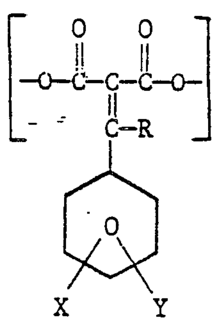

(I)

wherein
R = H, $C_1$-$C_4$-alkyl or phenyl and
X and Y can be identical or different and are H, OH, methoxy, phenoxy, $C_1$-$C_4$-alkyl, phenyl, Cl or Br, with molecular weights $\overline{M}n$ of 970 to 9 000, an OH number of 5-115 and a COOH number of 0-8.

6. UV-stabilised, thermoplastic plastics having a content of benzylidene malonic acid polyesters containing structural units of the formula (I)

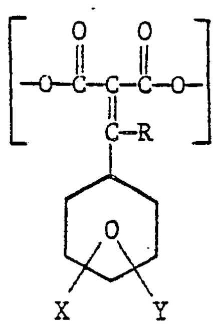

(I)

wherein
R = H, $C_1$-$C_4$-alkyl or phenyl and
X and Y can be identical or different and are H, OH, methoxy, phenoxy, $C_1$-$C_4$-alkyl, phenyl, Cl or Br, with molecular weights $\overline{M}n$ of 970 to 9 000, an OH number of 5-115 and a COOH number of 0-8.

7. Films with thicknesses of 10 to 100 μm, of thermoplastic aromatic polycarbonates with a content of 1 % by weight to 15 % by weight, based on the weight of the film, of benzylidene malonic acid polyesters containing structural units of the formula (I)

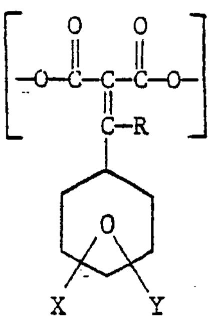

(I)

wherein

R = H, $C_1$-$C_4$-alkyl or phenyl and

X and Y can be identical or different and are H, OH, methoxy, phenoxy, $C_1$-$C_4$-alkyl, phenyl, Cl or Br, with molecular weights $\overline{M}n$ of 970 to 9 000, an OH number of 5-115 and a COOH number of 0-8.

8. Use of the polycarbonate films of Claim 7 for coating mouldings of thermoplastic plastics.

**Revendications**

1. Procédé pour la fabrication de polyesters benzylidènemaloniques de formule (Ib)

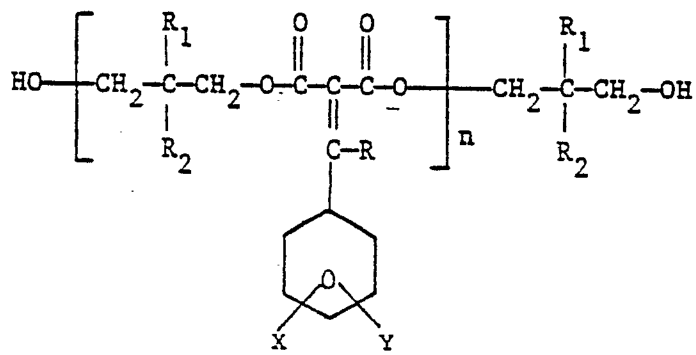

(Ib)

dans laquelle

R = H, alkyle en $C_1$-$C_4$ ou phényle,

$R_1$ est un groupe méthyle ou éthyle,

$R_2$ est un groupe méthyle, éthyle ou propyle,

« n » est un nombre entier de 3 à 30, et X et Y peuvent être identiques ou différents et sont H, OH, méthoxy, phénoxy, alkyle en $C_1$-$C_4$, phényle, Cl ou Br,

de poids moléculaire $\overline{M}n$ de 970 à 9 000, d'un indice d'OH de 5 à 115 et d'un indice de COOH de 0-8, caractérisé en ce que l'on fait réagir des polyesters maloniques de formule :

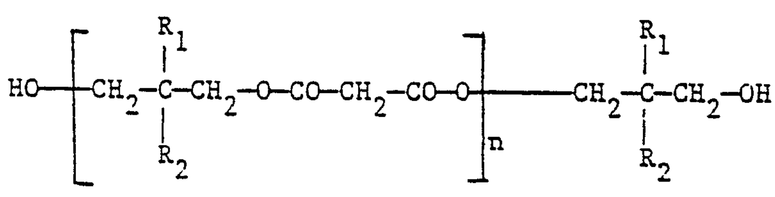

(IV)

dans laquelle $R_1$, $R_2$ et « n » ont la signification indiquée pour la formule (Ib), ayant des $\overline{M}n$ de 500 à 5 000 avec des aldéhydes ou des cétones de formule

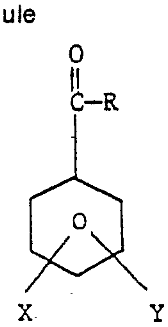

(III)

dans laquelle R, X et Y ont la signification indiquée pour la formule (Ib), selon une réaction du type Knoevenagel à des températures comprises entre 20 et 150 °C, éventuellement avec addition d'un solvant inerte, en présence d'un catalyseur de Knoevenagel.

2. Polyesters benzylidènemaloniques que l'on peut obtenir selon la revendication 1.

3. Polyesters benzylidènemaloniques, caractérisés en ce qu'ils répondent à la formule (II)

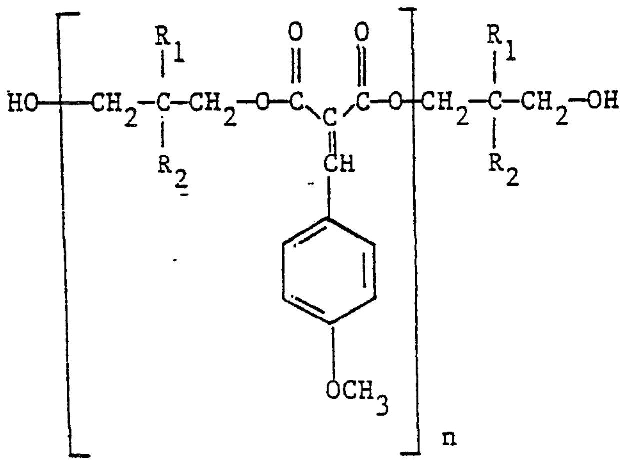

(II)

dans laquelle

$R_1$ est un groupe méthyle ou éthyle,

$R_2$ est un groupe méthyle, éthyle ou propyle et

« n » est un nombre entier de 3 à 30.

4. Utilisation de polyesters benzylidènemaloniques ayant des motifs de structure de formule

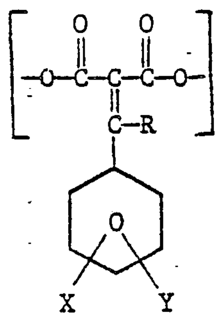

(I)

dans laquelle

R = H, alkyle en $C_1$-$C_4$ ou phényle et

X et Y peuvent être identiques ou différents et sont H, OH, méthoxy, phénoxy, alkyle en $C_1$-$C_4$, phényle, Cl ou Br,

ayant des poids moléculaires Mn de 970 à 9 000, un indice d'OH de 5-115 et un indice de COOH de 0-8, pour la stabilisation des matières thermoplastiques aux UV.

5. Procédé pour la stabilisation aux UV de matières thermoplastiques soit directement par homogénéisation des matières thermoplastiques avec les absorbeurs d'UV polymères dans les quantités appropriées pour la stabilisation aux UV, par rapport au poids de la matière thermoplastique, de manière connue à des températures entre 250 °C et 320 °C, soit par incorporation par l'intermédiaire d'un concentré à 5-10 % en poids, également dans ces matières thermoplastiques, de la même manière à des températures comprises entre 250 et 320 °C, caractérisé en ce que l'on utilise des absorbeurs d'UV polymères à motifs de structure de formule (I)

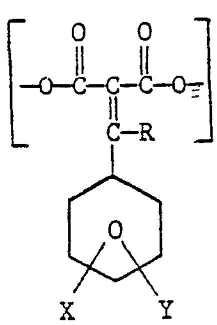

(I)

dans laquelle

R = H, alkyle en $C_1$-$C_4$ ou phényle et

X et Y peuvent être identiques ou différents et sont H, OH, méthoxy, phénoxy, alkyle en $C_1$-$C_4$, phényle, Cl ou Br,

ayant des poids moléculaires $\overline{M}n$ de 970 à 9 000, un indice d'OH de 5-115 et un indice de COOH de 0-8, pour la stabilisation des matières thermoplastiques aux UV.

6. Matières thermoplastiques stabilisées aux UV, contenant des polyesters benzylidènemaloniques à motifs de structure de formule (I)

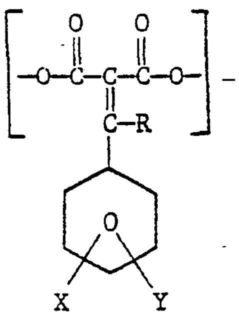

(I)

dans laquelle

R = H, alkyle en $C_1$-$C_4$ ou phényle et

X et Y peuvent être identiques ou différents et sont H, OH, méthoxy, phénoxy, alkyle en $C_1$-$C_4$, phényle, Cl ou Br,

ayant des poids moléculaires $\overline{M}n$ de 970 à 9 000, un indice d'OH de 5-115 et un indice de COOH de 0-8, pour la stabilisation des matières thermoplastiques aux UV.

7. Films de 10 à 100 µm d'épaisseur en polycarbonates aromatiques contenant 1 à 15 % en poids, par rapport au poids du film, de polyesters benzylidènemaloniques à motifs de structure de formule (I)

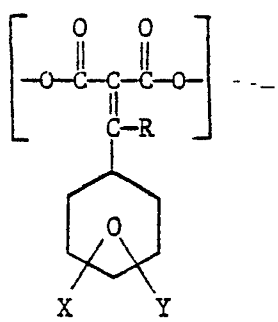

(I)

dans laquelle

R = H, alkyle en $C_1$-$C_4$ ou phényle et

X et Y peuvent être identiques ou différents et sont H, OH, méthoxy, phénoxy, alkyle en $C_1$-$C_4$, phényle, Cl ou Br,

ayant des poids moléculaires $\overline{M}n$ de 970 à 9 000, un indice d'OH de 5-115 et un indice de COOH de 0-8, pour la stabilisation des matières thermoplastiques aux UV.

8. Utilisation des films de polycarbonates de la revendication 7 pour le revêtement de pièces moulées en matières thermoplastiques.